# EUROPEAN PATENT APPLICATION

(11) **EP 1 531 650 A2**
(43) Date of publication of application: **18.05.2005**
(21) Application number: 04027011.8
(22) Date of filing: 12.11.2004
(51) Int. Cl.: H04R 25/00, H04Q 7/32

(54) **Hearing instrument having a wireless base unit**

(30) Priority: 12.11.2003 US 519149 P
(71) Applicant: GENNUM CORPORATION, Burlington, Ontario L7L 5P5 (CA)
(72) Inventor: Sykes, Frederick E., Burlington, Ontario L7N 1G4 (CA); Mitchler, Dennis W., Kanata, Ontario K2T 1G6 (CA); Zhang, Diana, Burlington, Ontario, L7L 6S6 (CA)
(74) Representative: Jones Day

(57) **Abstract**

In accordance with the teachings described herein, systems and methods are provided for a hearing instrument having a wireless base unit. The base unit may include one or more microphones for generating an audio signal and communications circuitry for wirelessly transmitting the audio signal to the hearing instrument. The hearing instrument may include communications circuitry for receiving the audio signal from the base unit, and may further include a processing device operable to process the audio signal to compensate for a hearing impairment of a hearing instrument user and a speaker for transmitting the processed audio signal into an ear canal of the hearing instrument user. The base unit may be positioned to receive audio signals at a distance from the hearing instrument user.

## Description

### FIELD

The technology described in this patent document relates generally to the field of wireless communications. More particularly, the patent document describes a hearing instrument having a wireless base unit.

### BACKGROUND AND SUMMARY

Typical hearing instruments that incorporate wireless transceivers may include many disadvantages that are overcome by the hearing instrument system described herein.

In accordance with the teachings described herein, systems and methods are provided for a hearing instrument having a wireless base unit. The base unit may include one or more microphones for generating an audio signal and communications circuitry for wirelessly transmitting the audio signal to the hearing instrument. The hearing instrument may include communications circuitry for receiving the audio signal from the base unit, and may further include a processing device operable to process the audio signal to compensate for a hearing impairment of a hearing instrument user and a speaker for transmitting the processed audio signal into an ear canal of the hearing instrument user. The base unit may be positioned to receive audio signals at a distance from the hearing instrument user.

### BRIEF DESCRIPTION OF THE DRAWINGS

Figure 1 is a block diagram of a hearing instrument having a wireless base unit.
Figure 2 illustrates a base unit in wireless communication with a plurality of hearing instruments.
Figure 3 illustrates a wireless communication between two binaural hearing instruments.
Figure 4 illustrates a user interface device in wireless communication with a hearing instrument.
Figure 5 illustrates a user interface device in wireless communication with a base unit.
Figure 6 is a block diagram of an example base unit.
Figure 7 is a block diagram of an example hearing instrument.
Figure 8 is a block diagram of an example hearing instrument showing a more-detailed example of communications circuitry.
Figure 9 is a functional diagram of an example baseband processor.

### DETAILED DESCRIPTION

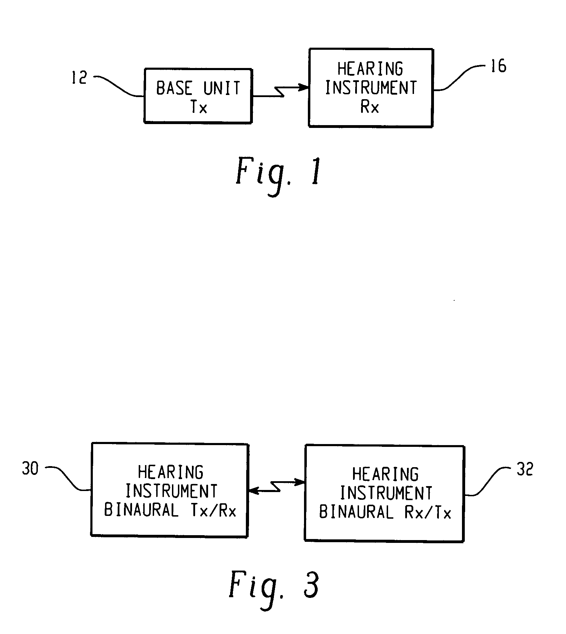

Figure 1 is a block diagram of a hearing instrument 10 having a wireless base unit 12. The base unit 12 may include one or more microphones for receiving an audio signal and communications circuitry for wirelessly transmitting the audio signal to the hearing instrument 10. The hearing instrument 10 may include communications circuitry for receiving the audio signal from the base unit 12. The hearing instrument 10 may further include a processing device operable to process the audio signal to compensate for a hearing impairment of a hearing instrument user and a speaker for transmitting the processed audio signal into an ear canal of the hearing instrument user.

The base unit 12 may be a hand held device having one or more microphones to receive audio signals, for example from nearby talkers. The base unit 12 may then convert the received audio signals into the digital domain, process the digital signals, modulate the processed signals to an RF carrier and transmit the signals to the hearing instrument 10. The base unit 12 may include an integral processing device, such as a digital signal processor (DSP), for processing received signals. For example, the base unit 12 may perform directional processing functions, audio compression functions, clear channel searching functions, or other signal processing functions.

In addition to transmitting audio signals to the hearing instrument, the base unit 12 may also transmit and receive other data, such as control data. For example, the base unit 12 may receive control data from a user interface to configure parameters, such as frequency channel and operational modes. In addition, control data may be transmitted from the base unit 12 to the hearing instrument 10, for example to program the hearing instrument. In another example, the communication link between the hearing instrument 10 and the base unit 12 may be bi-directional. Bi-directional communication between the hearing instrument 10 and the base unit 12 may be used to transmit data between the devices 10, 12, such as programming data, data uploads/downloads, binaural communication, or other applications. In one example, the base unit 12 may function as a wireless links to an external device or network, such as a computer network, a, CD player, a television, a cellular telephone, or others. For instance, the base unit 12 may receive an input (wired or wireless) from the external device or network and function as a wireless gateway between the device or network and the hearing instrument 10.

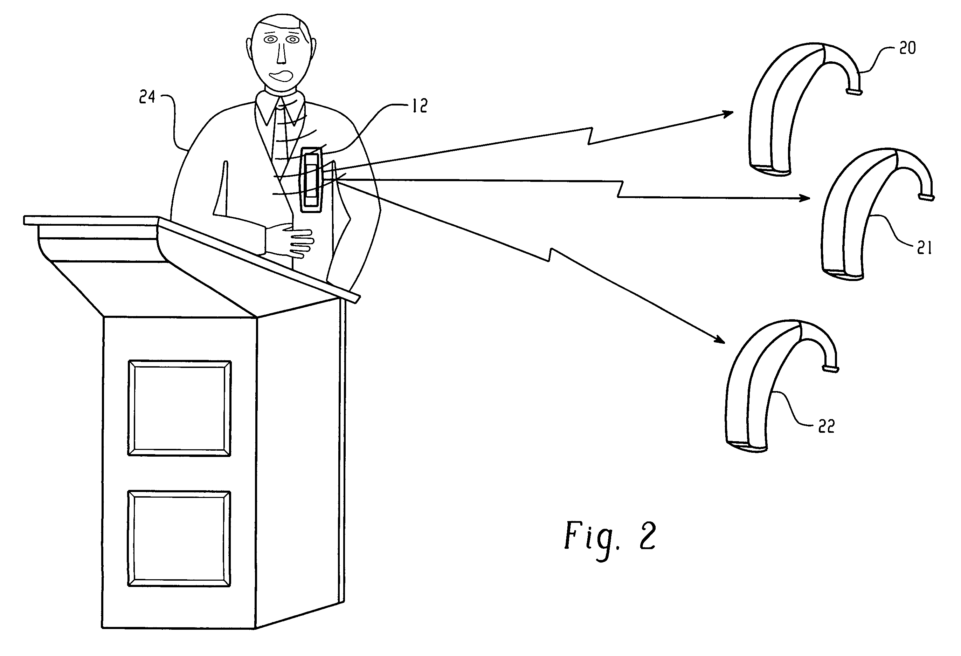

As illustrated in Figure 2, the base unit 12 may be positioned to receive audio signals at a distance from the hearing instrument user. In addition, the base unit 12 may be configured to transmit received audio signals and/or other data to a single hearing instrument or to a plurality of hearing instruments 20-22. In the illustrated example, the base unit 12 is positioned in the vicinity of a speaker 24, for example in the speaker's pocket or on a surface near the speaker, and the audio signals received by the base unit 12 are wirelessly transmitted to a plurality of hearing instruments 20-22. For example, a plurality of hearing instrument users may each have wireless access to the same base unit 12. In this manner, a speaker 12 may use a single base unit 12 to communicate with a number of hearing impaired listeners. In another example, the base unit 12 may transmit audio signals to two hearing instruments 20, 21 worn by a single hearing instrument user (e.g., one in each ear.)

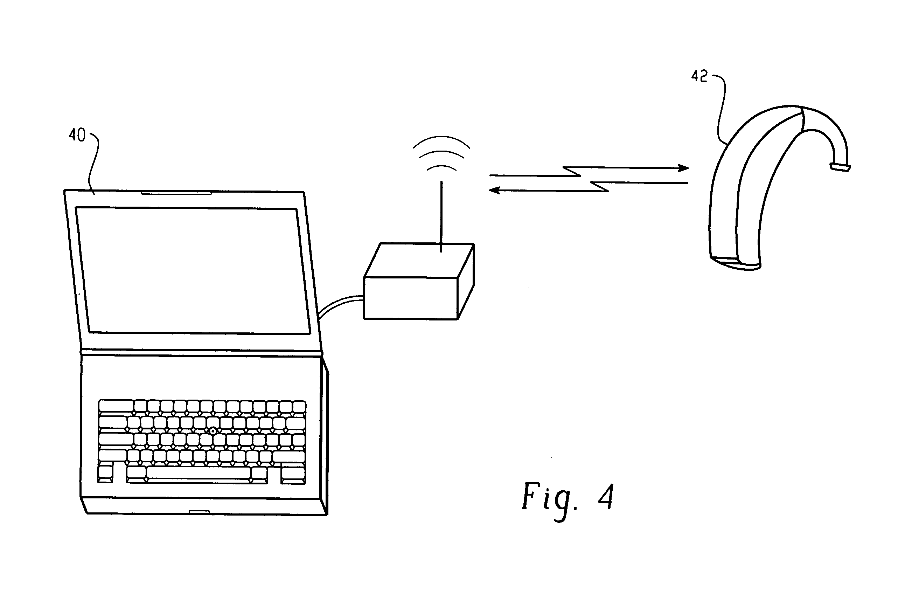

In the case of a hearing instrument user having two hearing instruments 30, 32, the communications circuitry in the hearing instrument may also be used to transmit audio signals and/or other data between the two hearing instruments 30, 32, as illustrated in Figure 3. For example, when used with binaural fittings, a wireless communications link between hearing instruments 30, 32 may be used to synchronize the two hearing instruments.

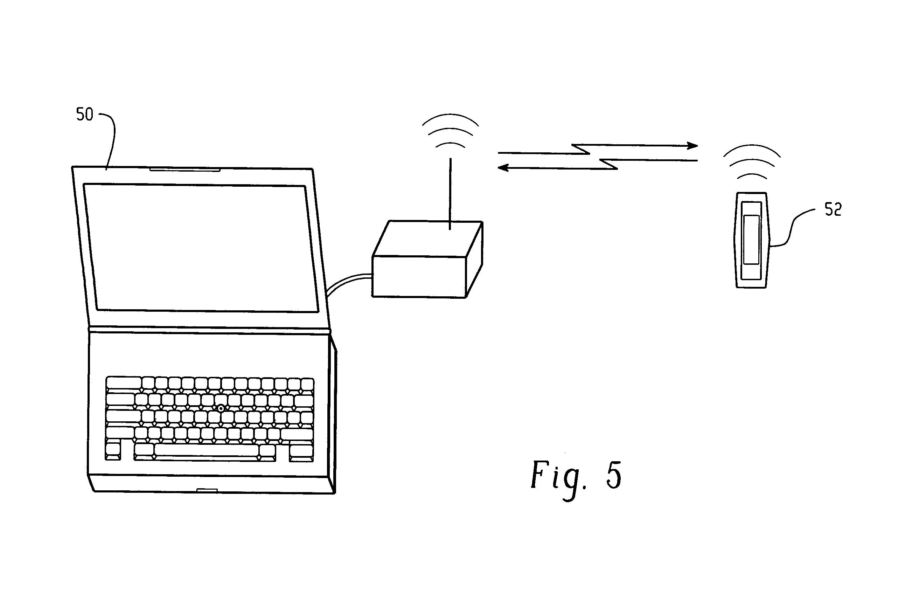

The wireless communications circuitry in the hearing instrument and/or base unit may also be used to communicate with a user interface device 40, 50, as illustrated in Figures 4 and 5. Figure 4 illustrates a user interface device 40 in wireless communication with a hearing instrument 42. Figure 5 illustrates a user interface device 50 in wireless communication with a base unit 52. The wireless links between the user interface 40, 50 and the hearing instrument 42 and/or base unit 52 may be either single- or bi-directional. The user interface 40, 50 may be a desktop or laptop computer, a hand-held device, or some other device capable of wireless communication with the hearing instrument 42 and/or base unit 52. The user interface 40, 50 may be used to wirelessly program and/or control the operation of the hearing instrument 42 and/or base unit 52. For example, a user interface 40 may be used by an audiologist or other person to program the hearing instrument 42 for the particular hearing impairment of the hearing instrument user, to switch between hearing instrument modes (e.g., bi-directional mode, omni-directional mode, etc.), to download data from the hearing instrument, or for other purposes. In another example, the user interface 40, 50 may be used to select the frequency channel and/or frequency band used for communications between the hearing instrument 42 and base unit 52. In addition, the base unit 52 functionality may be embedded as a part of a larger system, such as a cellular telephone, to enable direct communication to a hearing instrument.

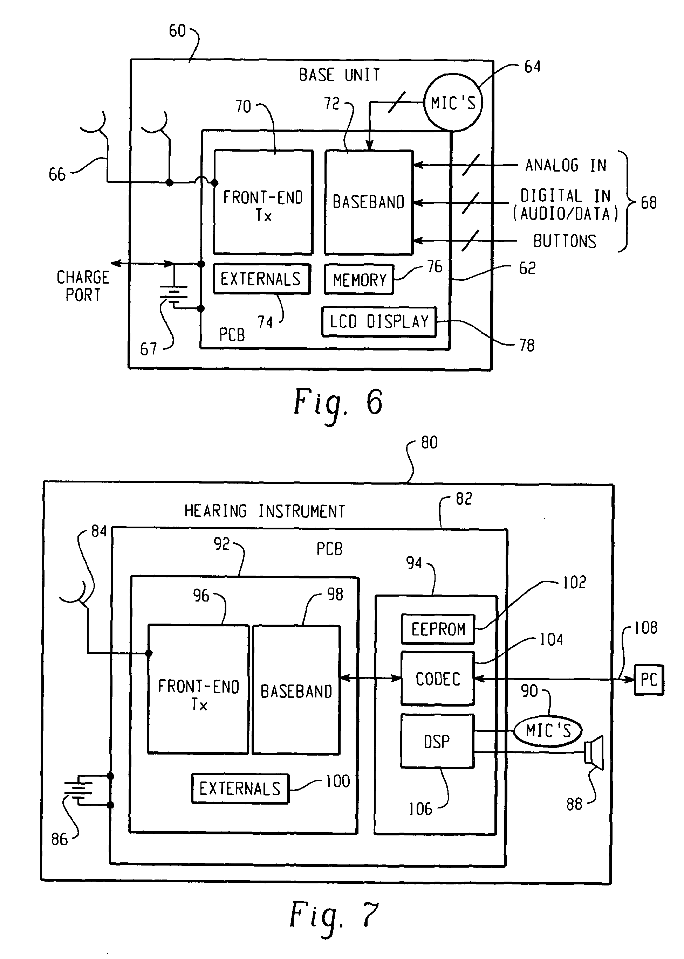

Figure 6 is a block diagram of an example base unit 60. The base unit 60 includes a printed circuit board (PCB) 62, one or more microphones 64, an antenna 66, a battery 67 and a plurality of inputs 68. The PCB 62 includes communications circuitry 70, a baseband processor 72, external components 74 (e.g., resistive and reactive circuit components, oscillators, etc.), a memory device 76 and an LCD 78. As illustrated, the communications circuitry 70 and the baseband processor 72 may each be implemented on an integrated circuit, but in other examples may include multiple integrated circuits and/or other external circuit elements. The inputs 68 include an analog input, a digital input, and one or more external input devices (e.g., a trimmer, a pushbutton switch, etc.) The analog input may, for example, include a stereo input from a television, stereo or other external device. The inputs 68 may also include wired or wireless inputs, such as a Bluetooth link or other wireless input/output. The antenna 66 may be an internal antenna or an external antenna, as illustrated. Also illustrated is a charge port for charging the battery 67.

In operation, the base unit receives audio signals with the one or more microphones 64 and converts the audio signals into the digital domain for processing by the baseband processor 72. The baseband processor 72 processes the audio signals for efficient wireless transmission, and the processed audio signals are transmitted to the hearing instrument by the communications circuitry 70. In this manner, the received audio signals from the microphone(s) 64 may be digitized near the source of the sound, with further processing and transmission performed in the digital domain and the final digital to analog conversion occurring in the hearing instrument. In addition, the base unit 72, using the built-in communications circuitry and RF signal strength detection, may automatically select a clear frequency channel for low-noise communication with the hearing instrument.

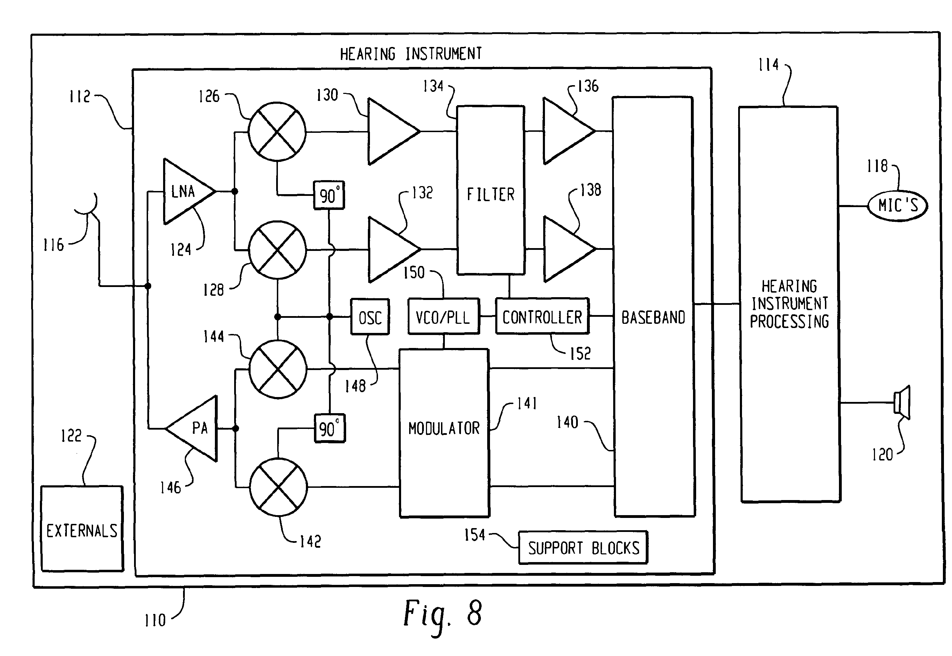

The communications circuitry 70 may include both transmitter and receiver circuitry for bi-directional communication with a hearing instrument or other wireless device. In one example, the frequency channel and/or the frequency band (e.g., UHF, ISM, etc.) used by the communications circuitry may be programmable. In other examples, the communications circuitry 70 may include multiple occurrences of transmitter and receiver circuitry. This these cases the single antenna may be preceded by an RF combiner and impedance matching network. In addition, the communications circuitry 70 may be operable to communicate on multiple channels to support functions such as stereo transmission, multi-language transmission, or others. For example, the communications circuitry 70 may transmit stereo audio to a set or binaural hearing instruments on two channels, one channel for each hearing instrument. The stereo signal may, for example, be synchronized at the base unit 60, or in another example may be synchronized using binaural communications between the two hearing instruments. A more detailed diagram of communications circuitry that may be used in the base unit 60 is described below with reference to Figure 8.

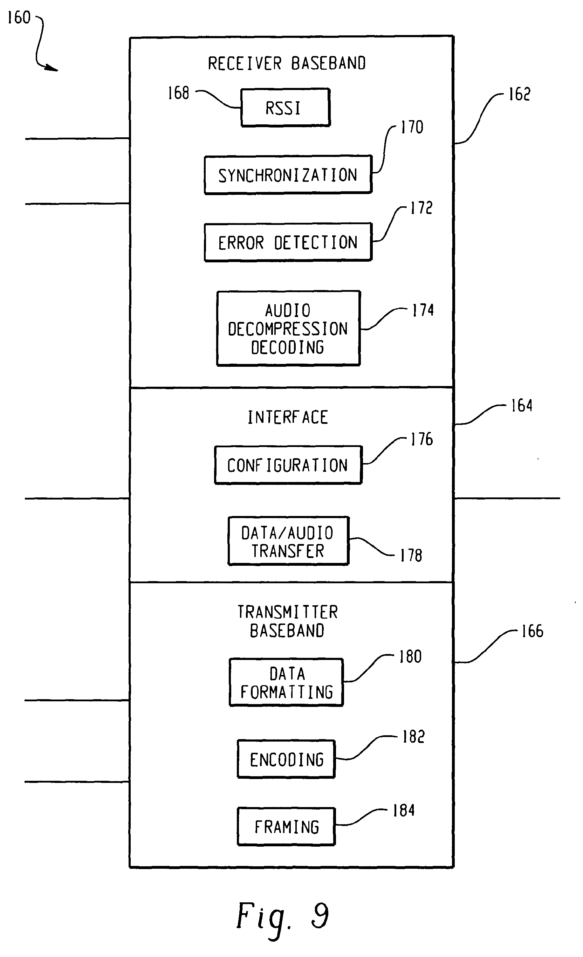

The baseband processor 72 is a digital signal processor (DSP) or other processing device(s), and is operable to perform baseband processing functions on audio signals received from the microphones 64 or other audio inputs 68 (e.g., CD player, television, etc.), such as audio compression, encoding, data formatting, framing, and/or other functions. Also, in the case of a bi-directional system, the baseband processor 72 may perform baseband processing functions on received data, such as audio decompression and decoding, error detection, synchronization, and/or other functions. In addition to baseband processing functions, the baseband processor 72 may perform processing functions traditionally performed at the hearing instrument, such as directional processing, noise reduction and/or other functions. An example baseband processor is described in more detail below with reference to Figure 9.

The baseband processor 72 may also execute a program for automatically selecting a clear frequency channel for low-noise communication with the hearing instrument. For example, a clear channel selection program executed by the baseband processor 72 may cause the communications circuitry 70 to sweep through the operating frequency band to identify a quiet frequency channel, and then set the communication circuitry 70 to operate using the identified quiet channel. A clear channel may be selected, for example, by measuring a noise level at each frequency in the band, and then selecting the frequency channel with the lowest noise level. In another example, the clear channel selection program may only sweep through frequencies in the operating band until a frequency channel is identified having a noise level below a pre-determined threshold, and then set the communications circuitry 70 to operate using the identified channel. A frequency band sweep may be initiated, for example, by a user input (e.g., depressing a button 68), by detecting that the noise level of a currently selected channel has exceeded a pre-defined threshold level, or by some other initiating event. The noise level of a channel may, for example, be measured by the an RSSI process in the baseband processor 72 (see, e.g., Figure 9), by a frequency synthesizer and channel signal strength detector included in the communications circuitry, or by some other means. For the purposes of this patent document, the noise level of a communication channel may include environmental noise, cross-talk from other channels, and/or other types of unwanted disturbances to the transmitted signal.

In another example, the baseband processor 72 may also be used to set the operating frequency band used by the communications circuitry 70. For example, the operating frequency band may be set to unused UHF bands, regulated bands for wireless microphones, or other frequency bands available for wireless communication. The operating frequency band may, for example, be set by a user input 68 or by the clear channel selection program. For example, if a clear frequency channel is not identified by the clear channel selection program in an initial band, then a new operating frequency band may be selected either automatically or by user input.

Figure 7 is a block diagram of an example hearing instrument 80. The hearing instrument 80 includes a hearing instrument circuit 82, an antenna 84, a battery 86, a speaker 88, and one or more microphones 90. The hearing instrument 80 may also include one or more input devices, such as volume control, mode selection button, or others. The hearing instrument circuit 82 includes a RF communication module 92 and a hearing instrument module 94, which may be arranged on a printed circuit board, a thin film circuit, a thick film circuit, or some other type of circuit that may be sized to fit within a hearing instrument shell. In one additional example, the RF communication module 92 may be included in an external attachment to the hearing instrument 80. The antenna 84 may be a low-power miniature antenna, such as the antenna described in the commonly-owned U.S. Patent Application No. , entitled "Antenna For A Wireless Hearing Aid System," which is incorporated herein by reference.

The RF communication module 92 includes communications circuitry 96, a baseband processor 98 and externals components 100 (e.g., resistive and reactive circuit components, oscillators, etc.) As illustrated, the communications circuitry 96 and the baseband processor 98 may each be implemented on an integrated circuit, but in other examples may include multiple integrated circuits and/or external circuit elements. The communications circuitry 96 may be the same as the communications circuitry 70 in the base unit 60 in order to better ensure compatibility.

The communications circuitry 96 may include both transmitter and receiver circuitry for bi-directional communication with the base unit 60. In addition, bi-directional communications circuitry 96 may be used to communicate with another hearing instrument (e.g., in a binaural fitting) and/or with other wireless devices. The communications circuitry 96 may also be programmable to select an operating frequency channel and/or frequency band. For example, in the case of a clear channel selection program executing on the base unit 60, as described above, the communications circuitry 96 may receive a control signal from the base unit 60 to change operating frequencies or bands. In another example, the clear channel selection program may instead execute on a processor in the hearing instrument, such as the baseband processor 98.

The baseband processor 98 may be a DSP or other processing device, and performs baseband processing functions on the received audio signal, such as audio decompression and decoding, error detection, synchronization, and/or other functions. The baseband processor 98 may also perform baseband processing functions on outgoing transmissions, such as audio compression and encoding, data formatting and framing, and/or other functions. In addition, the baseband processor 98 may perform other processing functions to interface the RF module 82 with the hearing instrument module 84.

The hearing instrument module 94 includes a memory device 102, a CODEC 104, and a hearing instrument processor 106. The memory device 102 may be a EEPROM or other type of persistent memory device. The memory device 102 may be used to store hearing instrument settings, record hearing instrument parameters, or for other data storage. The CODEC 104 may be used to interface the hearing instrument module 94 with the baseband processor 98 and with external devices (e.g., an audiologist's PC or other computing device) via an external serial port 108. The hearing instrument processor 106 is operable to process audio signals received from the base unit or from the hearing instrument microphone(s) 90 to compensate for the hearing impairments of a hearing instrument user and transmit the processed audio signal into the ear canal of the hearing instrument user via the speaker 88. The hearing instrument processor 106 may also perform other signal processing functions, such as directional processing, occlusion cancellation and/or other digital hearing instrument functions. An example hearing instrument processor 106 that may be used in the system described herein is set forth in the commonly-owned U.S. Patent Application No. 10/121,221, entitled "Digital Hearing Aid System."

Figure 8 is a block diagram of an example hearing instrument 110 showing a more-detailed example of communications circuitry. The example communications circuitry illustrated in Figure 8 may also be used in a base unit, such as the example base unit 60 shown in Figure 6. The example hearing instrument 110 includes an RF communication module 112, a hearing instrument processor 114, an antenna 116, one or more hearing instrument microphones 118, a hearing instrument speaker 120 and one or more externals components 122 (e.g., resistive and reactive circuit components, filters, oscillators, etc.) As illustrated, the RF communication module 112 and the hearing instrument processor 114 may each be implemented on a single integrated circuit, but in other examples could include multiple integrated circuits and/or external circuit components.

The RF communication module 112 includes a baseband processor 140 and communications circuitry. The communications circuitry includes a transmit path and a receive path. The receive path includes a low noise amplifier (LNA) 124, a down conversion quadrature mixer 126, 128, buffering amplifiers 126, 128, an I-Q image reject filter 134 and a slicer 136, 138. The transmit path includes a modulator 141, an up conversion quadrature mixer 142, 144 and a power amplifier 146. The receive and transmit paths are supported and controlled by the baseband processor 140 and clock synthesis circuitry 148, 150, 152. The clock synthesis circuitry includes an oscillator 148, a phase locked loop circuit 150 and a controller 152. The oscillator 148 may, for example, use an off chip high Q resonator (e.g., crystal or equivalent) 122. The frequency of the phase locked loop circuit 150 is set by the controller 152, and controls the operating frequency channel and frequency band. The controller 152 may, for example, be accessed by a clear channel selection program, as described above, to select the operating frequency channel and/or frequency band of the system. Also included in the RF communication module 112 are support blocks 154, which may include voltage and current references, trimming components, bias generators and/or other circuit components for supporting the operation of the transceiver circuitry.

In operation, an RF signal received by the antenna 116 is amplified by the LNA 124, which feeds the down conversion mixer 126, 128 to translate the desired RF band to a complex signal. The output of the down conversion mixer 126, 128 is then buffered 130, 132, filtered by the image reject filter 134 and slicer 136, 138 and input to the baseband processor 140. The baseband processor 140 performs baseband processing functions, such as synchronizing the incoming data stream, extracting the main payload and any auxiliary data channels (RSSI and AFC information), and performing necessary error detection and correction on the data blocks. In addition, the baseband processor 140 decompresses/decodes the received data blocks to extract the audio signal, for example as a standard I2S output.

Outgoing audio and/or control signals may be encoded and formatted for RF transmission by the baseband processor 140. In the case of outgoing audio signals, the baseband processor 140 may also perform audio compression functions. The processed signal is modulated to an RF carrier by the modulator 141 and up conversion mixer 142, 144. The RF signal is then amplified by the power amplifier 146 and transmitted over the air medium by the antenna 116.

Figure 9 is a functional diagram of an example baseband processor 160. The example baseband processor 160 may, for example, be used in the hearing instrument and/or base unit. The baseband processor 160 may perform receiver baseband processing functions 162, interface functions 164 and transmitter baseband processing functions 166. The illustrated baseband processor 160 includes two receiver inputs, two interface input/outputs, and two transmitter outputs, corresponding to the input/outputs to the baseband processor 140 shown in Figure 8. It should be understood, however, that other input/output configurations could be used.

The receiver baseband processing functions 162 include signal level baseband functions 168, 170, such as a synchronization function 170 to synchronize with the incoming data stream, and a data extraction function 168 for extracting the payload data. Also included in the receiver functions 162 are an error detection function 172 for detecting and correcting errors in the received data blocks, and an audio decompression decoding function 174 for extracting an audio signal from the received data blocks.

The transmitter baseband processing functions 166 include data formatting 180 and framing 184 functions for converting outgoing data into an RF communication protocol and an encoding function 182 for error correction and data protection. The RF communication protocol may be selected to support the transmission of high quality audio data as well as general control data, and may support a variable data rate with automatic recognition by the receiver. The encoding function 182 may be configurable to adjust the amount of protection based on the content of the data. For example, portions of the data payload that are more critical to the audio band from 100Hz to 8kHz may be protected more than data representing audio from 8kHz to 16kHz. In this manner, high quality audio, although in a narrower band, may still be recovered in a noisy environment. In addition, the transmitter baseband processing functions 166 may include an audio compression function for compressing outgoing audio data for bandwidth efficient transmission.

The interface functions 164 include a configuration function 176 and a data/audio transfer function 178. The data/audio transfer function 178 may be used to transfer data between the baseband processor 160 and other circuit components (e.g., a hearing instrument processor) or external devices (e.g., computer, CD player, etc.) The configuration function 176 may be used to control the operation of the communications circuitry. For example, the configuration function 176 may communication with a controller 152 in the communications circuitry to select the operating frequency channel and/or frequency band. In one example, the configuration function 176 may be performed by a clear channel selection program, as described above, that identifies a low noise channel and/or frequency band and sets the operating parameters of the communication circuitry accordingly.

This written description uses examples to disclose the invention, including the best mode, and also to enable a person skilled in the art to make and use the invention. The patentable scope of the invention may include other examples that occur to those skilled in the art. For example, the RF communication module described herein may instead be incorporated in devices other than a hearing instrument or base unit, such as a wireless headset, a communication ear-bud, a body worn control device, or other communication devices.

## Claims

1. A wireless hearing instrument system, comprising:
a base unit including one or more microphones for generating an audio signal and including communications circuitry for wirelessly transmitting the audio signal;
a hearing instrument including communications circuitry for receiving the audio signal from the base unit, the hearing instrument being operable to process the audio signal to compensate for a hearing impairment of a hearing instrument user and to transmit the processed audio signal into an ear canal of the hearing instrument user; and
a clear channel selection program executed by a processor in the wireless hearing instrument system and operable to automatically select a communication channel from a range of available frequencies for transmitting the audio signal from the base unit to the hearing instrument.

2. The wireless hearing instrument system of claim 1, wherein the base unit further includes a baseband processor for processing the audio signal and wherein the clear channel selection program is executed by the baseband processor.

3. The wireless hearing instrument system of claim 2, wherein the baseband processor is operable to compress the audio signal and wherein the hearing instrument is operable to decompress the audio signal before processing to compensate for the hearing impairment of the hearing instrument user.

4. The wireless hearing instrument system according to one of the claims 2 to 3, wherein the baseband processor is operable to encode and format the audio signal for wireless transmission.

5. The wireless hearing instrument system according to one of the claims 1 to 4, wherein the clear channel selection program selects the communication channel by sweeping the range of available frequencies to identify a frequency with a minimum noise level.

6. The wireless hearing instrument system according to one of the claims 1 to 5, wherein the clear channel selection program is further operable to select one of a plurality of frequency bands for transmitting the audio signal from the base unit to the hearing instrument.

7. The wireless hearing instrument system according to one of the claims 1 to 6, further comprising:
a second hearing instrument including a communications circuitry for receiving the audio signal from the base unit.

8. The wireless hearing instrument system of claim 7, wherein the communications circuitry in the hearing instrument and the second hearing instrument is further operable to transmit data wirelessly.

9. The wireless hearing instrument system of claim 8, wherein the system is operable to transmit data wirelessly between the hearing instrument and the second hearing instrument, and wherein the data may include audio signals and control signals.

10. The wireless hearing instrument system according to one of the claims 7 to 9, wherein the base unit is operable to transmit a stereo audio signal to the hearing instrument and the second hearing instrument.

11. The wireless hearing instrument system of claim 10, wherein the base unit includes an audio input for receiving the stereo audio signal from an external device.

12. The wireless hearing instrument system according to one of the claims 10 to 11, wherein the base unit is operable to transmit a first portion of the stereo audio signal to the hearing instrument using a first frequency channel and to transmit a second portion of the stereo audio signal to the second hearing instrument using a second frequency channel.

13. The wireless hearing instrument system according to one of the claims 1 to 12, wherein the communications circuitry in the base unit is further operable to receive data wirelessly.

14. The wireless hearing instrument system of claim 13, wherein the base unit is operable to wirelessly receive a control signal for controlling one or more operations of the base unit.

15. The wireless hearing instrument system of claim 14, wherein the control signal is used to select the communication channel for transmitting the audio signal from the base unit to the hearing instrument.

16. The wireless hearing instrument system according to one of the claims 14 to 15, wherein the control signal is used to select a frequency band for transmitting the audio signal from the base unit to the hearing instrument.

17. The wireless hearing instrument system according to one of the claims 14 to 16, wherein the control signal is transmitted from a user interface device.

18. The wireless hearing instrument system according to one of the claims 14 to 17, wherein the control signal is transmitted from the hearing instrument.

19. The wireless hearing instrument system according to one of the claims 1 to 18, wherein the communications circuitry in the hearing instrument is further operable to transmit data wirelessly.

20. The wireless hearing instrument system according to one of the claims 1 to 19, wherein the base unit includes at least two microphones, and wherein the base unit is operable to process audio signals received from the at least two microphones to generate a directional audio signal for transmission to the hearing instrument.

21. The wireless hearing instrument system according to one of the claims 1 to 20, wherein the base unit includes an input for receiving an additional audio signal from an external device, and wherein the base unit is operable to wirelessly transmit the additional audio signal to the hearing instrument.

22. The wireless hearing instrument system of claim 21, wherein the input for receiving the additional audio signal from the external device is a wireless link to the external device.

23. The wireless hearing instrument system according to one of the claims 1 to 22, wherein the base unit includes an input for receiving an additional audio or data signal from a computer network, and wherein the base unit is operable to wirelessly transmit the additional audio or data signal to the hearing instrument.

24. The wireless hearing instrument system according to one of the claims 1 to 23, wherein the hearing instrument is operable to wirelessly receive a control signal for controlling one or more operations of the hearing instrument.

25. The wireless hearing instrument system according to one of the claims 1 to 24, wherein the hearing instrument is operable to wirelessly receive programming data to set one or more hearing impairment correction characteristics of the hearing instrument.

26. A wireless hearing instrument system, comprising:
a base unit including one or more audio inputs for receiving a stereo audio signal and including communications circuitry for wirelessly transmitting the stereo audio signal; and
a pair of hearing instruments that include communications circuitry for receiving the stereo audio signal from the base unit, at least one of the hearing instruments being operable to process the stereo audio signal to compensate for a hearing impairment of a hearing instrument user;
the base unit being operable to transmit the stereo audio signal over two frequency channels, wherein one frequency channel is used to transmit a first portion of the stereo audio signal to a first one of the hearing instruments and another frequency channel is used to transmit a second portion of the stereo audio signal to a second one of the hearing instruments.

27. The wireless hearing instrument system of claim 26, wherein the base unit includes at least two microphones for generating the stereo audio signal.

28. The wireless hearing instrument system according to one of the claims 26 to 27, wherein the base unit includes an audio input for receiving the stereo audio signal from an external device.

29. The wireless hearing instrument system of claim 28, wherein the audio input receives the stereo signal over a wired or socketed connection with the external device.

30. The wireless hearing instrument system according to one of the claims 28 to 29, wherein the audio input receives the stereo signal over a wireless link with the external device.

31. The wireless hearing instrument system according to one of the claims 26 to 30, wherein the base unit is included in a communication device.
